Europäisches Patentamt

(19) European Patent Office

Office européen des brevets

(11) Numéro de publication : **0 364 312 B1**

# (12) FASCICULE DE BREVET EUROPEEN

(45) Date de publication du fascicule du brevet :
27.03.91 Bulletin 91/13

(21) Numéro de dépôt : 89402444.7

(22) Date de dépôt : 07.09.89

(51) Int. Cl.⁵ : **H04M 9/08, H04M 1/60, H04M 1/00**

(54) Circuit intégré pour poste téléphonique avec détecteur d'enveloppe de signal.

(30) Priorité : 16.09.88 FR 8812117

(43) Date de publication de la demande :
18.04.90 Bulletin 90/16

(45) Mention de la délivrance du brevet :
27.03.91 Bulletin 91/13

(84) Etats contractants désignés :
DE ES GB IT NL

(56) Documents cités :
EP-A- 0 120 325
EP-A- 0 274 787
GB-A- 2 122 851
GB-A- 2 175 175
NEC - RESEARCH & DEVELOPMENT, no. 83,
octobre 1986, pages 57-65, Tokyo, JP; T.
MAKABE et al.: "Single-chip PCM COMBO
LSIs with digital gain setting"

(56) Documents cités :
MOTOROLA TECHNICAL DEVELOPMENTS,
vol. 5, no. 1, octobre 1985, pages 8-9, Motorola,
Schaumburg, Illinois, US; D.E. BUSH: "A technique for voice detection in a PCM speakerphone"
ELECTRONICS, vol. 59, no. 33, octobre 1986,
pages 135-136, New York, US; R. ROSEN-
BERG: "Mitel fits speakerphone on one ISDN
phone chip"

(73) Titulaire : SGS THOMSON
MICROELECTRONICS SA
7, Avenue Galliéni
F-94250 Gentilly (FR)

(72) Inventeur : Nicolai, Jean
Cabinet Ballot-Schmit 7 rue le Sueur
F-75116 Paris (FR)

(74) Mandataire : Ballot, Paul Denis Jacques
Cabinet Ballot-Schmit 7, rue le Sueur
F-75116 Paris (FR)

## Description

L'invention concerne les postes téléphoniques numériques, c'est-à-dire ceux qui sont destinés à transmettre sur une ligne téléphonique ou recevoir d'une ligne téléphonique des signaux de parole sous forme d'un signal numérique et non analogique.

Ces postes comportent un circuit-intégré de conversion analogique-numérique et de conversion numérique-analogique dont l'appellation maintenant généralisée est "circuit cofidec", interposé entre les parties analogiques du poste téléphonique (principalement le haut-parleur et le microphone) et les parties numériques (destinées à être raccordées à la ligne téléphonique).

Un circuit cofidec est plus précisément un codeur-décodeur avec circuits de filtrage pour limiter la bande de fréquences transmises sur la ligne. Le codeur est un codeur à compression logarithmique (ou sensiblement logarithmique), c'est-à-dire qu'il convertit les signaux analogiques en signaux numériques mais en les affectant d'un coefficient d'atténuation d'autant plus faible que l'amplitude des signaux est plus grande. La raison de cette compression logarithmique est la nécessité d'améliorer le rapport signal sur bruit des petits signaux. Le décodeur établit un décodage numérique-analogique inverse pour rétablir les niveaux d'amplitude du signal émis à l'origine.

L'invention s'intéresse plus particulièrement aux postes téléphoniques disposant d'une fonction d'écoute amplifiée (c'est-à-dire avec haut-parleur extérieur d'assez forte puissance pour que les personnes situées dans une pièce puissent entendre les signaux de parole reçus ; l'invention s'intéresse aussi spécialement aux postes téléphoniques disposant d'une fonction dite "mains libres", c'est-à-dire ceux qui peuvent fonctionner sans combiné : ces postes comportent sur le corps même du poste, et non sur un combiné mobile, d'une part un haut parleur d'écoute amplifiée, et d'autre part un microphone assez sensible pour recueillir les signaux de parole émis par une personne se trouvant à une certaine distance du poste (1 mètre par exemple ou plusieurs mètres).

Les postes à écoute amplifiée et a fortiori les postes à fonction "mains libres" présentent un problème difficile à résoudre : c'est la suppression du risque d'effet "larsen", c'est-à-dire du risque d'entrée en oscillation des circuits du poste, avec production d'un bruit strident dans le haut-parleur.

En effet, dès lors qu'il y a un haut-parleur de puissance importante, il y a risque de réinjection de signal sonore du haut-parleur vers le microphone, établissant une boucle de réaction dont le gain peut-être supérieur à l'unité. Ce risque est évidemment particulièrement élevé dans les téléphones mains libres dont le microphone (ou l'amplificateur de microphone) est plus sensible que celui d'un combiné classique.

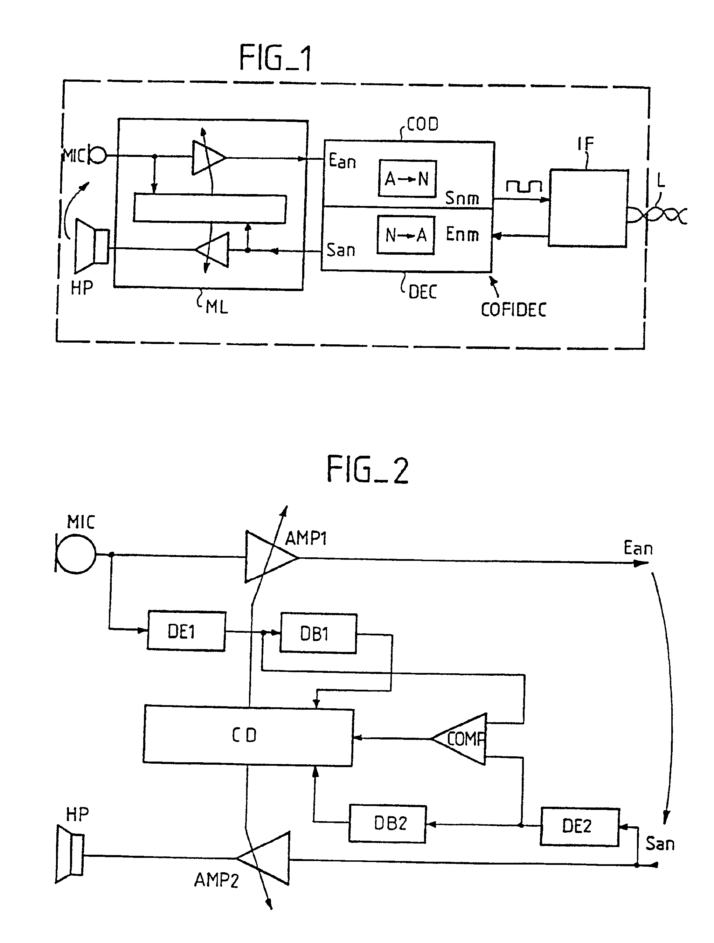

La structure générale des circuits d'un poste téléphonique numérique à fonction 'mains libres" est représentée à la figure 1.

Le microphone est désigné par la référence MIC ; le haut-parleur par la référence HP ; la ligne téléphonique par la référence L.

Un circuit cofidec est globalement représenté en deux moitiés qui sont un codeur numérique-analogique COD, et un décodeur DEC à fonction de conversion complémentaire de celle du codeur.

Un circuit d'interface IF est interposé entre le côté d'entrée/sortie numérique du cofidec et la ligne téléphonique L. Il a pour fonction d'appliquer à la ligne téléphonique le signal présent sur une sortie numérique Snm du cofidec ; ce signal correspond à un signal de parole émis par le microphone ; il a aussi pour fonction de recevoir de la ligne un signal émis à l'autre bout de la ligne, et de l'appliquer à une entrée numérique Enm du cofidec.

Enfin un circuit ML assurant la fonction mains libres, et notamment la fonction de suppression de l'effet larsen, est interposé entre le côté d'entrée/sortie analogique du cofidec et les organes analogiques tels que le microphone et le haut-parleur. Ce circuit est raccordé d'une part à une entrée analogique Ean du cofidec pour lui appliquer les signaux analogiques issus du microphone, et d'autre part à une sortie analogique San du cofidec pour recevoir des signaux analogiques issus de la ligne et les transmettre au haut-parleur.

Le circuit accomplissant les fonctions "mains libres" et notamment la fonction anti-larsen est représenté plus en détail à la figure 2.

Il comprend essentiellement :
– un premier amplificateur à gain variable AMP1 relié du côté de son entrée au microphone MIC et relié du côté de sa sortie à l'entrée analogique Ean du cofidec ;
– un deuxième amplificateur à gain variable AMP2 relié du côté de son entrée à la sortie analogique San du cofidec et relié du côté de sa sortie au haut-parleur ;
– et des circuits de traitement de signal destinés à analyser les signaux émis par le microphone à destination de la ligne téléphonique et les signaux reçus de la ligne à destination du haut-parleur, pour assurer l'effet anti-larsen.

Avant d'expliquer le détail du circuit de la figure 2, on va indiquer succinctement ce que doit faire ce circuit.

On veut principalement déterminer, dans une conversation téléphonique, quel est le côté qui est en train de parler et quel est le côté qui est en train d'écouter. Pour le poste téléphonique du côté qui parle, il faut augmenter le gain du microphone (augmentation de gain de l'amplificateur AMP1) et diminuer le gain du haut-parleur (réduction de gain de l'amplificateur AMP2). Pour le poste du côté qui écoute, il faut au contraire augmenter le gain du haut-parleur (action sur AMP2) et diminuer le gain du microphone (action sur AMP1). Mais dans les deux cas, on doit maintenir au dessous de l'unité le gain total de boucle de la chaîne comprenant le microphone MIC, les amplificateurs, la diaphonie (parasite ou voulue) qui fait revenir vers le haut-parleur une partie du signal émis par le microphone, et le couplage acoustique entre le haut-parleur et le microphone.

C'est ainsi qu'on évite l'effet larsen tout en ajustant les gains de microphone et de haut-parleur à chaque instant en fonction de la conversation en cours.

Un autre paramètre à prendre en considération est le bruit ambiant que capte le microphone : il ne faut pas que ce bruit ambiant soit pris pour de la parole et inverse les commandes de gain par rapport à ce qu'il faudrait.

Le rôle des circuits de traitement de la figure 2 est donc d'évaluer si le signal émis et le signal reçu sont de la parole ou du bruit, de comparer le signal émis et le signal reçu, de diminuer le gain de transmission du signal le plus faible des deux et d'augmenter le gain de transmission du signal le plus fort, sauf si le signal le plus fort est du bruit ambiant.

La transition de gain doit se faire avec douceur pour éviter des "clics" sonores audibles sur la ligne. Elle doit se faire rapidement quand un côté se met à parler, lentement quand il s'arrête. D'autres problèmes doivent être pris en compte (interlocuteur qui coupe la parole à l'autre par exemple) mais ils n'ont rien à voir avec la présente invention et on n'en parlera donc pas.

Les circuits de la figure 2 comprennent donc différents blocs destinés à effectuer les comparaisons et évaluations ci-dessus.

Le bloc de base est un détecteur d'enveloppe de signal qui évalue le niveau moyen de signal (émis ou reçu) ; il reçoit le signal dont on veut évaluer le niveau et il fournit un signal qui représente l'allure des variations moyennes lentes de ce signal, les variations rapides étant éliminées.

Un premier détecteur d'enveloppe DE1 a une entrée reliée au microphone pour analyser le signal émis, et un deuxième détecteur d'enveloppe DE2 a une entrée reliée à la sortie analogique du cofidec pour analyser le signal reçu.

Les sorties des deux détecteurs sont appliquées aux entrées d'un comparateur COMP qui détermine quel est le signal ayant le niveau moyen le plus élevé.

Par ailleurs ces sorties peuvent être appliqués chacune à l'entrée d'un détecteur, DB1 et DB2 respectivement, dont le rôle est de déterminer si le signal analysé est plutôt du bruit ou plutôt de la parole. Sans entrer dans les détails, les détecteurs de bruit DB1 et DB2 détectent les pics du signal d'enveloppe en sortie des détecteurs d'enveloppe et les comparent avec le signal d'enveloppe. Si l'enveloppe instantanée devient supérieure d'une certaine quantité au dernier pic détecté, il s'agit d'un signal de parole ; sinon il s'agit de bruit ambiant (dont la particularité est d'être assez stable).

Les sorties du comparateur COMP et des détecteurs de bruit DB1 et DB2 sont appliquées à un circuit de commande CD qui commande les gains des amplificateurs AMP1 et AMP2 en fonction des résultats d'analyse des signaux émis et reçus.

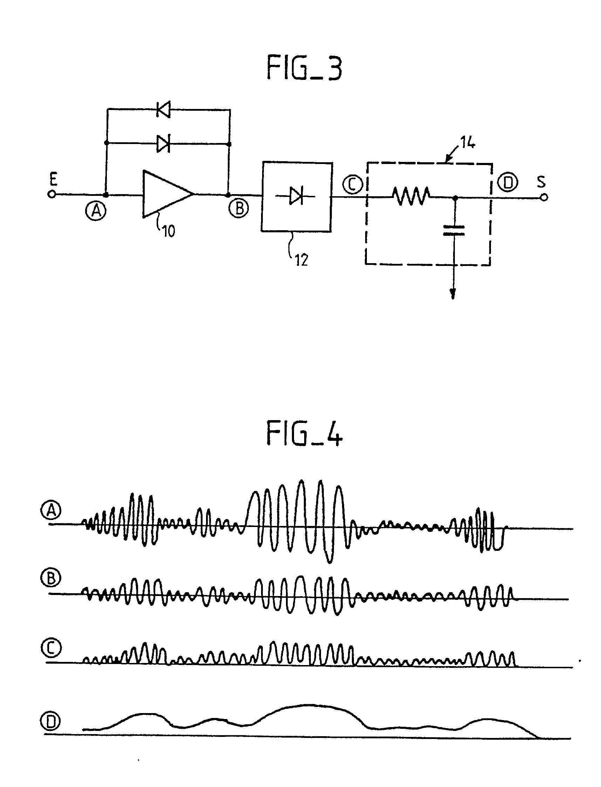

Dans la technique antérieure, le détecteur d'enveloppe est réalisé par un circuit tel que représenté à la figure 3.

C'est un détecteur à gain logarithmique, c'est-à-dire qu'il fournit un signal représentant la valeur moyenne du signal reçu, mais avec une échelle logarithmique : les petits signaux sont plus amplifiés (ou moins atténués) que les grands. Cela permet de faire correctement la comparaison entre les niveaux de signal émis et reçu, aussi bien pour les grands signaux que pour les petits signaux, sans que le rapport signal sur bruit soit trop élevé pour les petits signaux et sans risque de saturation pour les grands signaux.

Le détecteur d'enveloppe logarithmique de la technique antérieure comprend essentiellement un amplificateur à gain logarithmique 10 recevant le signal analogique dont le niveau doit être contrôlé ; cet amplificateur est suivi d'un redresseur double alternance 12 lorsque le signal d'entrée a des alternances positives et négatives ; le redresseur est suivi d'un intégrateur RC de lissage 14, dont la constante de temps est choisie pour faire disparaître les variations rapides de signal et conserver les variations lentes de l'enveloppe.

La sortie du détecteur est prise en sortie de l'intégrateur RC.

L'amplificateur logarithmique est un amplificateur opérationnel bouclé entre sa sortie et son entrée par deux diodes en parallèle tête-bêche. Du fait que les diodes ont une courbe courant/tension logarithmique lorsqu'elles sont en direct et du fait qu'à tout instant une des diodes au moins est en direct, l'amplificateur 10 a un coefficient d'amplification logarithmique, l'amplification étant beaucoup plus importante pour les petits signaux que pour les grands.

La figure 4 représente à titre d'exemple une forme d'onde de signal analogique reçu à l'entrée du détecteur d'enveloppe de la figure 3 (ligne A) ; la ligne B représente le signal comprimé logarithmiquement, en sortie de l'amplificateur 10 : la dynamique de variation des signaux s'est réduite, le rapport d'amplitude entre les petits signaux et les grands est considérablement plus réduit qu'à la ligne A ; la ligne C représente le signal en sortie du redresseur 12 ; enfin, la ligne D représente le signal de sortie de l'intégrateur RC 14 ; les variations rapides du signal d'entrée ont disparu, seules subsistent les variations lentes représentant l'enveloppe du signal analogique d'entrée ou son niveau moyen, mais avec une échelle logarithmique.

Dans les postes téléphoniques proposés jusqu'à maintenant, le circuit de la figure 1 est réalisé à l'aide de plusieurs circuits-intégrés différents ; le cofidec est réalisé en général par un circuit-intégré en technologie MOS (CMOS ou NMOS) qui se prête bien à la réalisation de circuits de conversion et filtrage. Mais le circuit assurant les fonctions de "mains libres" est réalisé à l'aide d'un circuit-intégré de technologie bipolaire.

En effet, on ne sait pas intégrer en technologie MOS standard deux diodes tête-bêche en parallèle.

De plus, que ce soit en technologie MOS ou en technologie bipolaire, le circuit de la figure 3 nécessite des capacités de valeur élevée pour le lissage, et ces capacités ne peuvent pas être intégrées.

La présente invention propose un nouveau circuit pour poste téléphonique, permettant d'intégrer le détecteur d'enveloppe (et donc l'ensemble de la fonction "mains libres") dans le même circuit-intégré que les cofidec, même si celui-ci est réalisé en technologie MOS ; l'invention a également pour but la suppression des capacités extérieures nécessaires à la fonction de détection d'enveloppe de signal.

Selon l'invention, on propose un circuit pour poste téléphonique numérique, comportant des bornes d'entrée/sortie de signaux analogiques et des bornes d'entrée/sortie de signaux numériques, un codeur-décodeur analogique-numérique à compression logarithmique interposé entre les bornes analogiques et les bornes numériques, au moins un amplificateur à gain variable connecté du côté analogique du codeur-décodeur, et un circuit de commande pour commander le gain de l'amplificateur à gain variable, et au moins un détecteur d'enveloppe de signal destiné à fournir au circuit de commande une indication sur le niveau de signal moyen émis sur la ligne téléphonique ou reçu de la ligne, ce circuit étant caractérisé en ce que le détecteur d'enveloppe possède une entrée reliée à une entrée ou une sortie numérique du codeur-décodeur, et une sortie raccordée au circuit de commande de l'amplificateur et en ce que le détecteur d'enveloppe comporte de préférence un compteur numérique ayant une entrée de comptage et une entrée de décomptage, un comparateur numérique raccordé d'une part à l'entrée ou à la sortie numérique du codeur-décodeur et d'autre part aux sorties du compteur, et un circuit logique de commande relié à la sortie du comparateur et apte à commander l'incrémentation du compteur à une première fréquence ou la décrémentation du compteur a une deuxième fréquence différente de la première, selon l'état du compteur, la sortie du détecteur étant reliée aux sorties du compteur.

Le détecteur d'enveloppe reçoit donc non pas un signal analogique issu du microphone ou issu de la sortie analogique du cofidec de la figure 1. Il reçoit au contraire un signal numérique prélevé du côté numérique du cofidec. Or les standards de téléphonie numérique prévoient que les cofidecs ont une fonction de compression logarithmique ou quasi logarithmique dans le sens analogique-numérique (et une fonction d'expansion inverse dans le sens contraire).

On peut donc se dispenser de l'amplificateur à gain logarithmique de la figure 3.

De plus, on peut aussi se passer du redresseur car les standards des cofidecs pour postes téléphoniques prévoient un codage numérique avec un bit de signe et 7 bits (par exemple) définissant l'amplitude en valeur absolue. Il suffit de ne pas utiliser le bit de signe pour accomplir la fonction redressement double alternance.

Enfin, en utilisant un compteur et un comparateur numériques, on montrera comment on peut réaliser la fonction d'intégration ou de filtrage passe-bas de l'intégrateur 14 de la figure 3, sans utiliser de capacités.

La fréquence de comptage sera en principe plus élevée que la fréquence de décomptage ; par exemple elle est huit fois plus élevée.

La fréquence de comptage dépend de la vitesse à laquelle on veut que le compteur suive les variations du signal d'entrée.

La fréquence de décomptage sera d'autant plus basse qu'on veut des variations plus lentes du signal d'enveloppe ; elle agit comme la fréquence de coupure de l'intégrateur RC de la figure 1.

Le détecteur d'enveloppe de signal émis aussi bien que le détecteur d'enveloppe de signal reçu peuvent être réalisés de cette manière. L'un aura son entrée raccordée à la sortie numérique du cofidec, l'autre aura son entrée raccordée à l'entrée numérique du cofidec.

Il faut remarquer que le signal de sortie du détecteur d'enveloppe selon l'invention est ici un signal numérique et non analogique ; cela n'a pas d'importance car le but final est de comparer le niveau du signal d'enveloppe à une valeur déterminée ou à un autre signal, et ces comparaisons peuvent se faire sur des signaux numériques aussi bien que sur des signaux analogiques.

D'autres caractéristiques et avantages de l'invention apparaîtront à la lecture de la description détaillée qui suit et qui est faite en référence aux dessins annexés dans lesquels :

– la figure 1 déjà décrite représente la constitution d'un circuit pour poste téléphonique de l'art antérieur ;

– la figure 2 représente le détail du circuit accomplissant la fonction "mains libres" dans la technique antérieure ;

– la figure 3 représente un détecteur d'enveloppe de signal de la technique antérieure ;

– la figure 4 illustre les formes d'onde en divers points du circuit de la figure 3 ;

– la figure 5 représente la courbe de conversion standard d'un cofidec, montrant la compression logarithmique de l'entrée analogique vers la sortie numérique ;

– la figure 6 représente le circuit selon l'invention.

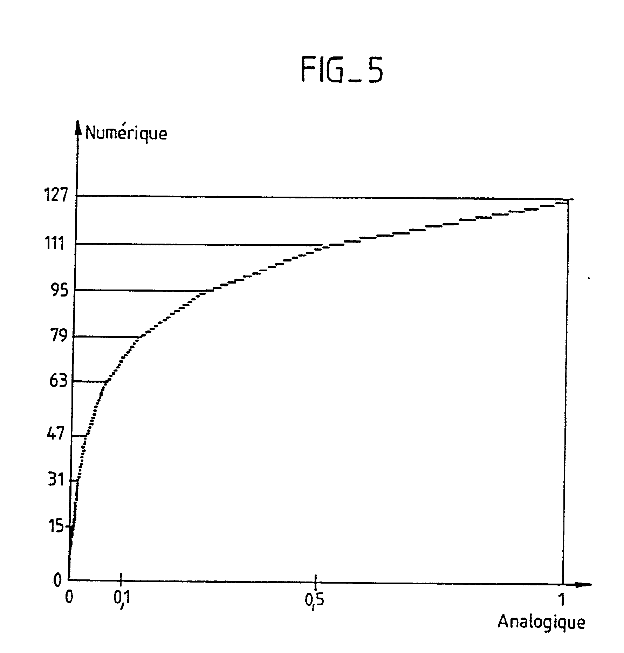

Le codage binaire de l'amplitude du signal analogique est représenté pour un cofidec standard à la figure 5. Le codage est un codage sur huit bits avec un bit de signe et sept bits définissant l'amplitude en valeur absolue du signal.

En abscisse on a porté l'amplitude du signal selon une échelle linéaire (arbitraire : on considère une amplitude minimale 0 et une amplitude maximale 1) ; en ordonnée on a porté, également selon une échelle linéaire, une représentation numérique décimale de la sortie binaire. Autrement dit, alors que les sept bits de sortie peuvent prendre toutes les valeurs binaires entre 0000000 et 1111111, ces valeurs ont été représentées par des nombres décimaux correspondants de 0 à 127.

Comme on le voit, une courbe de forme globalement logarithmique (mais variant en escalier) représente la valeur numérique du code binaire de sortie en fonction de l'amplitude du signal analogique d'entrée.

La courbe logarithmique est décomposée en huit segments de droite. Les segments sont codés par les trois bits de poids fort de la sortie binaire ; par conséquent le premier segment correspond aux valeurs numériques 0 à 15, le deuxième aux valeurs numériques 16 à 31, le troisième 32 à 47, etc. jusqu'au huitième pour les valeurs 111 à 127.

Le codage des trois bits définissant le segment correspondant à une gamme d'amplitudes données est sensiblement logarithmique, en ce sens que pour respecter la forme sensiblement logarithmique de la courbe tracée sur la figure 5, les segments successifs ont des pentes variant en progression logarithmique; on voit clairement sur la figure 5 que pour les très petits signaux (inférieurs à 1% du maximum), la pente est très forte, alors que pour les grands signaux elle est très faible. Pratiquement le premier segment de droite ne sert à coder que les signaux d'amplitude comprise entre 0 et 1% du maximum, alors que le dernier segment sert à lui seul à coder les signaux d'amplitude comprise entre 50 et 100% du maximum.

A l'intérieur de chaque segment de droite, les quatre bits de poids faible servent à définir la valeur précise du signal analogique ; cette fois le codage est linéaire et non logarithmique, c'est-à-dire que si le signal analogique est incrémenté d'un pas donné (16 pas identiques pour parcourir la totalité du segment), alors la valeur numérique est incrémentée d'une unité (un bit de poids faible).

Puisque le cofidec fournit un signal comprimé logarithmiquement, et que les sept bits de sortie définissent en valeur absolue l'amplitude comprimée logarithmiquement du signal émis ou reçu sur la ligne téléphonique, il suffit d'utiliser ce codage et de regarder les variations globales moyennes du signal numérique en éliminant les variations rapides pour réaliser la fonction de détection d'enveloppe cherchée.

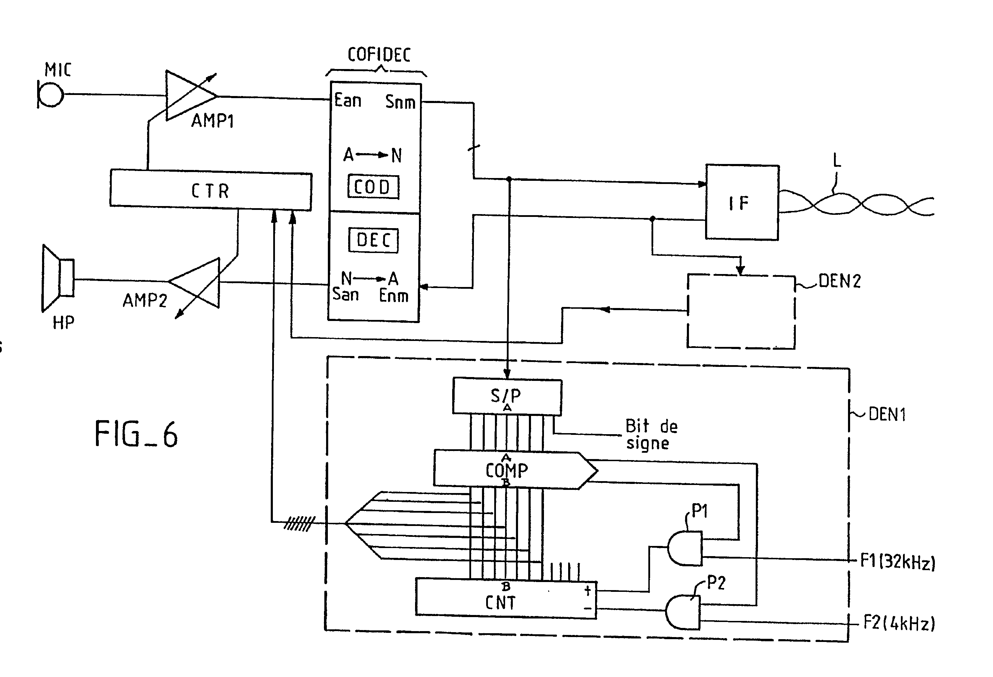

La méthode adoptée dans l'exemple de réalisation décrit en référence à la figure 6 est la suivante : le signal numérique sera comparé au contenu d'un compteur. Si le signal est plus grand que le contenu du compteur, on incrémente le compteur, avec une fréquence relativement élevée F1 ; si au contraire le signal numérique devient plus faible que le contenu du compteur, on décrémente le compteur, mais avec une fréquence plus faible F2. Le contenu du compteur représente alors une approximation numérique de l'enveloppe du signal d'entrée.

La figure 6 montre l'ensemble du circuit selon l'invention. Les éléments qui jouent le même rôle qu'à la figure 1 portent les mêmes références : le cofidec avec son codeur COD et son décodeur DEC, et avec ses entrées analogique Ean et numérique Enm et ses sorties analogique San et numérique Snm ; le microphone MIC et son amplificateur à gain variable AMP1, le haut-parleur HP et son amplificateur à gain variable AMP2, la ligne téléphonique L, le circuit d'interface IF.

Les amplificateurs à gain variable sont commandés par un circuit de commande CTR en fonction des comparaisons de niveau moyen des signaux émis et reçu sur la ligne et en fonction du fait que le signal le plus fort est du bruit ou du signal de parole.

Les détecteurs d'enveloppe de signal qui servent à déterminer les niveaux moyens de signal sont désignés par DEN1 pour le signal émis et DEN2 pour le signal reçu.

Des détecteurs de bruit peuvent être utilisés comme à la figure 1. Ils ne sont pas représentés pour ne pas alourdir la figure 6. Si on en utilise, ils sont construits sous forme numérique de préférence, principalement à l'aide de registres et de comparateurs.

Les détecteurs d'enveloppe DEN1 et DEN2 ont, comme on le voit, leur entrée raccordée du côté numérique du cofidec ; DEN1 a son entrée raccordée à la sortie numérique Snm, et DEN2 a son entrée raccordée à l'entrée numérique Enm.

Les sorties des détecteurs DEN1 et DEN2 sont appliquées au circuit de commande CTR. Ces sorties sont des sorties numériques.

Le détecteur DEN2 est rigoureusement identique au détecteur DEN1 ; seul DEN1 a été représenté en détail.

Le détecteur d'enveloppe DEN1 comporte comme organe d'entrée un convertisseur série/parallèle S/P dans le cas général où les signaux numériques de sortie et d'entrée du cofidec sont des mots binaires série.

Le détecteur comporte encore un comparateur numérique COMP à sept bits, et un compteur numérique CNT.

Les sorties parallèles du convertisseur S/P sont connectées d'un côté du comparateur COMP ; les sept sorties de poids fort du compteur CNT sont connectées de l'autre côté du comparateur COMP.

Le compteur CNT est par exemple un compteur à 11 bits. Il possède une entrée de comptage (+) et une entrée de décomptage (–).

Le comparateur COMP possède deux sorties (ou une sortie et un circuit logique pour établir deux sorties complémentaires) ; l'une des sorties fournit un signal d'autorisation d'incrémentation du compteur lorsque l'amplitude numérisée logarithmiquement A du signal émis sur la ligne est supérieure au contenu B du compteur CNT (défini à partir de ses sept bits de poids fort) ; l'autre sortie fournit un signal d'autorisation de décrémentation du compteur lorsque l'amplitude A du signal numérique est inférieure au contenu B du compteur.

Une horloge d'incrémentation à fréquence F1 est appliquée à l'entrée d'incrémentation du compteur à travers une porte de validation P1 contrôlée par le signal d'incrémentation en sortie du comparateur. Inversement, une horloge de décrémentation à fréquence F2 est appliquée à l'entrée de décrémentation à travers une porte P2 de validation contrôlée par le signal de décrémentation en sortie du comparateur.

La fréquence d'incrémentation F1 est beaucoup plus élevée que la fréquence de décrémentation F2.

Dans un exemple où le cofidec fournit un mot de huit bits toutes les 125 millisecondes (fréquence de conversion 8 kilohertz), on peut prendre une fréquence d'incrémentation de 32 kilohertz et une fréquence de décrémentation de 4 kilohertz.

La sortie du détecteur d'enveloppe est une sortie numérique prise sur les sept bits de poids fort du compteur CNT.

Le circuit fonctionne de la manière suivante : si le signal croît de sorte que sa valeur A dépasse le niveau indiqué par les sept bits de poids fort du compteur, le compteur s'incrémente rapidement et le compteur tend à suivre le niveau du signal, avec un temps de réponse limité toutefois par la fréquence de comptage ; lorsque le signal redevient inférieur au contenu du compteur, soit parce que le contenu du compteur finit par rattraper le signal, soit parce que le signal est redescendu, le compteur est décrémenté, mais très lentement, de sorte que le compteur garde en mémoire avec une constante de temps importante le niveau maximal précédemment atteint par le signal analogique. C'est en ce sens que la sortie du détecteur représente (sous forme numérique) l'enveloppe des variations lentes du signal émis (pour DEN1) ou reçu (pour DEN2).

Les sorties numériques de DEN1 et DEN2 sont appliquées au circuit de commande CTR qui effectue les comparaisons nécessaires et qui commande les amplificateurs du côté analogique du cofidec pour accomplir les fonctions anti-larsen, ou toute autre fonction pour laquelle le détecteur d'enveloppe de signal s'avère utile.

## Revendications

1. Circuit pour poste téléphonique numérique, comportant des bornes d'entrée/sortie de signaux analogiques et des bornes d'entrée/sortie de signaux numériques, un codeur-décodeur analogique-numérique à compression logarithmique (COD, DEC) interposé entre les bornes analogiques et les bornes numériques, au moins un amplificateur à gain variable (AMP1, AMP2) connecté du côté analogique du codeur-décodeur, et un circuit de commande (CTR) pour commander le gain de l'amplificateur à gain variable, et au moins un détecteur d'enveloppe de signal (DEN1) destiné à fournir au circuit de commande une indication sur le niveau de signal moyen émis sur la ligne téléphonique ou reçu de la ligne, ce circuit étant caractérisé en ce que le détecteur d'enveloppe (DEN1) possède une entrée reliée à une entrée ou une sortie numérique du codeur-décodeur, et une sortie raccordée au circuit de commande de l'amplificateur et en ce que le détecteur d'enveloppe comporte un compteur numérique (CNT) ayant une entrée de comptage et une entrée de décomptage, un comparateur numérique (COMP) raccordé d'une part à une entrée ou une sortie numérique du codeur-décodeur et d'autre part aux sorties du compteur, et un circuit logique de commande (P1, P2) relié à la sortie du comparateur et apte à commander l'incrémentation du compteur à une première fréquence (F1) ou la décrémentation du compteur a une deuxième fréquence (F2) différente de la première, selon l'état du compteur, la sortie du détecteur étant prélevée sur les sorties du compteur.

2. Circuit selon la revendication 2, caractérisé en ce que la première fréquence est largement supérieure à la deuxième.

3. Circuit selon l'une des revendications 1 à 2, caractérisé en ce que le codeur-décodeur fournit et reçoit des mots binaires ayant d'une part un bit de signe et d'autre part des bits définissant l'amplitude en valeur absolue du signal émis ou reçu, seuls ces derniers étant appliqués au comparateur.

4. Circuit selon l'une des revendications 1 à 3, caractérisé en ce que le compteur comporte des sorties de poids fort et des sorties de poids faible, seules les sorties de poids fort étant appliquées au comparateur.

5. Circuit selon l'une des revendications 1 à 4, caractérisé en ce que le détecteur d'enveloppe comporte un convertisseur série/parallèle (S/P) interposé entre l'entrée ou la sortie numérique du codeur-décodeur et le comparateur.

6. Circuit selon l'une des revendications 1 à 5, caractérisé en ce qu'il comporte un détecteur d'enveloppe (DEN1) pour le signal émis sur la ligne et un détecteur d'enveloppe (DEN2) pour le signal reçu, le premier étant raccordé à une sortie numérique (Snm) du codeur-décodeur et le deuxième étant raccordé à une entrée numérique (Enm) du codeur-décodeur.

## Ansprüche

1. Schaltung für digitalen Telefonapparat, mit Eingangs/Ausgangsanschlüssen für Analogsignale und Eingangs/Ausgangsanschlüssen für Digitalsignale, einem Analog/Digital-Kodierer/Dekodierer mit logarithmischer Kompression (COD, DEC), der zwischen die Analoganschlüsse und die Digitalanschlüsse geschaltet ist, wenigstens einem Verstärker mit variabler Verstärkung (AMP1, AMP2), der mit der Analogseite des Kodierers/Dekodierers verbunden ist, und einer Steuerschaltung (CTR) zur Steuerung der Verstärkung des Verstärkers mit variabler Verstärkung, und wenigstens einem Signalhüllkurvendetektor (DEN1), der dazu bestimmt ist, an die Steuerschaltung einen Hinweis über den mittleren Pegel des an die Telefonleitung ausgegebenen oder des von der Leitung empfangenen Signals zu liefern, wobei die Schaltung dadurch gekennzeichnet ist, daß der Hüllkurvendetektor (DEN1) einen mit einem digitalen Eingang oder mit einem digitalen Ausgang des Kodierers/Dekodierers verbundenen Eingang und einen mit der Steuerschaltung des Verstärkers verbundenen Ausgang besitzt und daß der Hüllkurvendetektor einen Digitalzähler (CNT) mit einem Aufwärtszähleingang und einem Abwärtszähleingang, einen Digitalkomparator (COMP), der einerseits mit einem digitalen Eingang oder mit einem digitalen Ausgang des Kodierers/Dekodierers und andererseits mit den Ausgängen des Zählers verbunden ist, und eine Logiksteuerschaltung (P1, P2), die mit dem Ausgang des Komparators verbunden ist und dazu geeignet ist, entsprechend dem Zustand des Zählers die Inkrementierung des Zählers mit einer ersten Frequenz (F1) oder die Dekrementierung des Zählers mit einer von der ersten Frequenz verschiedenen zweiten Frequenz (F2) zu steuern, umfaßt, wobei die Ausgabe des Detektors an den Ausgängen des Zählers abgenommen wird.

2. Schaltung gemäß Anspruch 2, dadurch gekennzeichnet, daß die erste Frequenz weit oberhalb der zweiten Frequenz liegt.

3. Schaltung gemäß einem der Ansprüche 1 und 2, dadurch gekennzeichnet, daß der Kodierer/Dekodierer Binärworte ausgibt und empfängt, die einerseits ein Vorzeichenbit und andererseits den Absolutbetrag der Amplitude des ausgegebenen oder empfangenen Signals definierende Bits besitzen, wobei nur die letzteren in den Komparator eingegeben werden.

4. Schaltung gemäß einem der Ansprüche 1 bis 3, dadurch gekennzeichnet, daß der Zähler Ausgaben mit hoher Wertigkeit und Ausgaben mit niedriger Wertigkeit umfaßt, wobei nur die Ausgaben mit hoher Wertigkeit in den Komparator eingegeben werden.

5. Schaltung gemäß einem der Ansprüche 1 bis 4, dadurch gekennzeichnet, daß der Hüllkurvendetektor einen zwischen den digitalen Eingang oder den digitalen Ausgang des Kodierers/Dekodierers und den Komparator geschalteten Seriell/Parallel-Wandler (S/P) umfaßt.

6. Schaltung gemäß einem der Ansprüche 1 bis 5, dadurch gekennzeichnet, daß sie einen Hüllkurvendetektor (DEN1) für das an die Leitung ausgegebene Signal und einen Hüllkurvendetektor (DEN2) für das empfangene Signal umfaßt, wobei der erste mit einem digitalen Ausgang (Snm) des Kodierers/Dekodierers und der zweite mit einem digitalen Eingang (Enm) des Kodierers/Dekodierers verbunden ist.

## Claims

1. A circuit for a digital telephone set, comprising input/output terminals for analog signals and input/output terminals for digital signals, an analog-digital encoder/decoder with logarithmic compression (COD and DEC) placed between the analog terminals and the digital terminals, at least one variable gain amplifier (AMP1 and AMP2) connected on the analog side of the encoder/decoder, a control circuit (CTR) in order to control the gain of the variable gain amplifier, and at least one signal envelope detector (DEN1) adapted to furnish the control circuit with an indication concerning the level of the mean signal fed to the telephone line or received from the line, said circuit being characterized in that the envelope detector (DEN1) possesses an input connected with a digital input or output of the encoder/decoder, and an output connected with the control circuit of the amplifier, and in that the envelope detector comprises a digital counter (CNT) having an up count input, and a down count input, a digital comparator (COMP) connected on the one hand with a digital input or output of the encoder-decoder, and on the other hand with the outputs of the counter, and a logical control circuit (P1 and P2), connected with the output of the comparator and adapted to control the incrementation of the counter at a first frequency (F1) or the decrementation of the counter at a second frequency (F2) different than the first frequency, in accordance with the state of the counter, the output of the detector being connected with the outputs of the counter.

2. The circuit as claimed in claim 2, characterized in that the first frequency is substantially greater than the second one.

3. The circuit as claimed in claim 1 or claim 2, characterized in that the encoder-decoder furnishes and receives binary words having on the one hand a sign bit and on the other hand bits defining the amplitude, as an absolute value, of the transmitted or received signal, only the latter being applied to the comparator.

4. The circuit as claimed in claim 1 or claim 2, characterized in that the counter comprises more significant outputs and less significant outputs, only the more significant outputs being applied to the comparator.

5. The circuit as claimed in any one of the preceding claims 1 through 4, characterized in that the envelope detector comprises a series/parallel (S/P) converter interposed between the digital input or the digital output of the encoder-decoder and the comparator.

6. The circuit as claimed in any one of the preceding claims 1 through 5, characterized in that it comprises an envelope detector (DEN1) for the signal fed to the line and an envelope detector (DEN2) for the received signal, the first being connected with a digital output (Snm) of the encoder-decoder and the second being connected with a digital input (Enm) of the encoder-decoder.

## FIG_1

## FIG_2

# FIG_3

# FIG_4

# FIG_5

FIG_6

MIC

AMP1

CTR

HP

AMP2

COFIDEC

Ean   Snm

A → N

COD

DEC

N → A

San   Enm

IF

L

DEN2

DEN1

S/P

Bit de signe

COMP

P1

P2

CNT   +

F1(32kHz)

F2(4kHz)

EP 0 364 312 B1